# EUROPÄISCHE PATENTSCHRIFT

(11) **EP 3 900 589 B1**
(45) Veröffentlichungstag und Bekanntmachung des Hinweises auf die Patenterteilung: **14.09.2022**
(21) Anmeldenummer: 20170794.0
(22) Anmeldetag: 22.04.2020
(51) Int. Cl.: A47K 3/30, E06B 1/38, E06B 3/02, F16B 12/10

(54) **BEFESTIGUNGS-VORRICHTUNG FÜR ZWEI ZUEINANDER SENKRECHT ANGEORDNETE VERBUNDSICHERHEITSGLAS-PLATTEN**
FASTENING DEVICE FOR TWO MUTUALLY PERPENDICULAR LAMINATED SAFETY GLASS PLATES
DISPOSITIF DE FIXATION POUR DEUX PANNEAUX DE VERRE DE SÉCURITÉ COMPOSITES AGENCÉS VERTICALEMENT L'UN PAR RAPPORT À L'AUTRE

(43) Veröffentlichungstag der Anmeldung: 27.10.2021
(73) Patentinhaber: Glas-Marte Beteiligung GmbH, 6900 Bregenz (AT)
(72) Erfinder: Feigl, Bernhard, 6911 Lochau (AT)
(74) Vertreter: Christ, Niko

(56) Entgegenhaltungen:
- US-A- 857 230

## Beschreibung

Die Erfindung bezieht sich auf eine Befestigungs-Vorrichtung für zwei zueinander senkrecht angeordnete Verbundsicherheitsglas-Platten nach dem Oberbegriff des Patentanspruchs 1, vgl. zum Beispiel Dokument US 857 230 A.

Beispielsweise ist der DE 10 2015 121 924 A1 eine Trennwand-Vorrichtung für eine Platte, insbesondere eine Glasplatte, die an einer Wand und/oder an einem Untergrund abgestützt ist, zu entnehmen. Diese Vorrichtung umfasst im Wesentlichen ein Halteprofil, das ein U-förmiges Widerlager aufweist. Dem Widerlager sind dabei drei Auflageflächen zugeordnet, die der in das Widerlager einzusetzenden Platte zugewandt sind. Mittels einer Klemm-Einrichtung ist anschließend die eingesetzte Platte mit dem Widerlager und folglich mit dem Halteprofil fixiert.

Folglich handelt es sich bei der durch diesen Stand der Technik bekannt gewordenen Vorrichtung um eine mechanische Verbindung zwischen einer Glasplatte, die beispielsweise eine Trennwand einer Duschkabine bildet, und einem Tragarm, durch den die Glasplatte an der Wand und/oder dem Untergrund abgestützt bzw. gehalten ist.

Um einen unmittelbaren Wirkkontakt zwischen dem aus Metall hergestellten Tragarm, dem metallischen Halteprofil und der Platte aus Glas zu verhindern, ist zwischen der Glas-Platte, dem Halteprofil bzw. dessen Widerlager und einem das Widerlager und die Glas-Platte durchgreifenden Bolzen aus Metall eine räumliche Trennung in Form einer Harz- oder Kunststoffeinlage vorzusehen. Durch diese Kunststoffeinlage ist demnach ein räumlicher Abstand zwischen den aus Metall bestehenden Bauteilen, nämlich dem Halteprofil und dem diesen durchgreifenden Haltebolzen sowie der aus Glas bestehenden Platte vorgesehen.

Nachteiliger Weise kann eine solche Konstruktion für die Herstellung von Tragkonstruktionen aus Glas, insbesondere Möbeln aus Glas, nicht verwendet werden. Zum einen sind nämlich bestimmte Bauteile des bekannt geworden Standes der Technik aus Metall gefertigt und zum anderen können solche Verbindungskonstruktionen ausschließlich für Glasplatten verwendet werden, denn in die Glasplatte sind Aufnahmeöffnungen einzuarbeiten, durch die der jeweilige Haltebolzen zur Befestigung der Glasplatte an dem Widerlager des Halteprofils durchzuführen ist. Einzelne Glasplatten weisen jedoch überhaupt keine Eigenstabilität auf und können folglich keine Tragkonstruktion für fremde Gegenstände bilden.

Bei modernen Glas-Bauprojekten und beispielsweise bei Glasmöbeln kommt es immer wieder vor, dass das Glas selbst statische Funktionen zu übernehmen hat. Insbesondere in der modernen Bauprojektierung ist Leichtigkeit und Transparenz gewünscht; dies kann von metallischen Bauteilen als Tragkonstruktion nicht geleistet werden.

Sobald jedoch eine solche transparente Bauweise durch die Verwendung des Werkstoffes Glas erfolgen soll, sind solche Glasplatten in einem Verbundsicherheitsglas herzustellen. Das Verbundsicherheitsglas zeichnet sich dadurch aus, dass zwei handelsübliche Glasplatten mit einem identischen Außenumfang übereinandergelegt werden und dass zwischen diesen beiden Glasplatten eine Laminatfolie dazwischen gelegt ist. Durch eine thermische Behandlung entsteht das Verbundsicherheitsglas, das entsprechend bruchsicher ist und eine enorme Eigenstabilität aufweist. Eine solche Verbundsicherheitsglas-Platte kann mit zusätzlichen fremden Gewichtskräften belastet sein. Sollte ein Bruch durch Überlast entstehen, bricht die Verbundsicherheitsglas-Platte nicht, denn die zwischen den einzelnen Sicherheitsglasscheiben vorhandene Laminatfolie verhindert die völlige Zerstörung. Sobald ein Riss im Glas erkannt ist, können geeignete Austausch- oder Reparaturmaßnahmen durchgeführt werden.

Wenn jedoch für die Herstellung von Bauprojekten oder Möbeln aus Glas diese bekannten Verbundsicherheitsglas-Platten verwendet sind, tritt das Problem auf, dass in jede einzelne Sicherheitsglasscheibe der Verbundsicherheitsglas-Platte eine Aufnahmeöffnung einzuarbeiten bzw. während des Herstellungsprozesses für die einzelnen Glasscheiben einzuarbeiten ist. Diese Aufnahmeöffnungen dienen nämlich während der Montage dazu, dass durch diese eine mechanische Wirkverbindung zwischen der Verbundsicherheitsglas-Platte und dem Halteprofil durch entsprechende metallische Bauteile hergestellt werden kann.

Wenn jedoch die Verbundsicherheitsglas-Platte aus zwei solcher Sicherheitsglasscheiben besteht, kann es oftmals vorkommen, dass beim Übereinanderlegen und thermischen Behandeln der Sicherheitsglasscheiben ein Versatz zwischen den jeweils in die Glasscheiben eingearbeiteten Aufnahmeöffnungen entsteht. Folglich liegen die Mittelpunkte der beiden Aufnahmeöffnungen der einzelnen Glasscheiben nicht koaxial zueinander. Wenn jedoch anschließend ein Haltebolzen durch die derart versetzt zueinander verlaufenden Aufnahmeöffnungen durchgeführt ist, können erhebliche Spannungskräfte oder sonstige ungewollte Belastungskräfte entstehen, denn der Bolzen überträgt die Eigengewichtskraft der derart hergestellten Verbundsicherheitsglas-Platte auf das jeweilige Halteprofil in ungünstigen bzw. ungleichmäßigen Übertragungsflächen. Aufgrund dieses Versatzes zwischen den beiden Aufnahmeöffnungen in den einzelnen Glasscheiben, können diese Belastungskräfte nicht gleichmäßig an den eingeschobenen Haltebolzen weitergeleitet werden.

Es ist seit langem bekannt, dieses Problem mithilfe von in die Aufnahmeöffnung eingesetzte Kunststoffeinlagen zu lösen. Diese Kunststoffeinlagen sind zentrisch zu durchbohren, sodass zumindest die Bohrungen in den beiden Kunststoffeinlagen koaxial zueinander verlaufen. Nachteiliger Weise hat sich bei diesem Montageprozess herausgestellt, dass die Kunststoffeinlagen in Form einer Doppelexzenterfläche mitdrehen können, während die Bohrung vorgenommen ist, sodass eine solche Montagemaßnahme erhebliche technische Schwierigkeiten aufweist und die oftmals zeitaufwendig vorzunehemen ist.

Es ist auch bekannt, die vereinzelten Glasbohrungen mit einem Epoxidharz oder einem Baukleber auszufüllen, abzustreichen und wenn der Harz ausgetrocknet ist, die Bohrung einzuarbeiten. Dies bedeutet nachteiliger Weise jedoch eine erheblich lange Liegezeit bis das Harz ausgetrocknet ist und ein entsprechend hoher Arbeitsaufwand ist hierfür vorzusehen.

Es ist daher Aufgabe der Erfindung, eine Befestigungs-Vorrichtung der eingangs genannten Gattung derart weiterzubilden dass diese zeitsparend, kostengünstig und zuverlässig, beispielsweise für die Montage von Möbeln aus Glas, verwendet werden kann, wobei das metallische Halteprofil als Führung während des Bohrvorganges dient, um einen möglichst koaxialen Bohrungsverlauf in der Klemmscheibe, insbesondere in dem Überstand der Klemmscheibe zu erreichen. Dabei sollen die Toleranz-Verschiebungen zwischen den Aufnahmeöffnungen in den einzelnen Glasscheiben durch die erfindungsgemäße Klemmscheibe während des Montagevorganges vollständig ausgeglichen sein und die Tragfähigkeit, insbesondere die Kraftübertragung zwischen der Verbundsicherheitsglas-Platte und dem diese abstützenden Halteprofil soll zuverlässig gewährleistet sein.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in dem Widerlager eine Klemmscheibe eingesetzt ist, die zwischen den drei Auflageflächen des Widerlagers und der in diese eingesetzte Verbundsicherheitsglas-Platte verläuft, dass die Klemmscheibe einen zylinderförmigen Überstand aufweist, der im Bereich der jeweiligen in die Platte eingearbeiteten Aufnahmeöffnung eingesetzt ist und dass durch den Überstand und der jeweiligen Aufnahmeöffnung der Platte ein Haltebolzen hindurchgeführt ist, durch den die Verbundsicherheitsglas-Platte an dem Halteprofil abgestützt ist, derart, dass der jeweilige Überstand vollflächig an der Innenseite der Aufnahmeöffnung der Platte unter Vorspannung anliegt, ist erreicht, dass der Versatz zwischen den Aufnahmeöffnungen der beiden übereinanderliegenden vereinzelten Glasscheiben während des Herstellungsverfahrens der Bohrung ausgeglichen ist. Gleichzeitig können die Belastungskräfte zwischen der Verbundsicherheitsglas-Platte und dem diese abstützenden Halteprofil über den in die Aufnahmeöffnung eingesetzten Überstand der Klemmscheibe vollständig und gleichmäßig übertragen sein.

Da die Klemmscheibe jeweils einen Überstand aufweist, dessen Außenkontur an die jeweilige Aufnahmeöffnung angepasst ist, die in die vereinzelte Glasscheibe eingearbeitet ist, liegt die äußere Umfangsfläche des Überstandes vollständig an der Innenseite der Aufnahmeöffnung an, sobald die Klemmscheibe zwischen den drei Auflageflächen des Widerlagers und der Verbundsicherheitsglas-Platte eingesetzt ist. Zudem ist vorteilhafter Weise der jeweiligen Überstand vollständig aus einem entsprechenden Kunststoffmaterial gefertigt, sodass keinerlei Lufteinschlüsse oder sonstige Hohlräume in dem Überstand vorhanden sind.

Sobald demnach die Verbundsicherheitsglas-Platte gemeinsam mit der Klemmscheibe in das U-förmige Widerlager des Halteprofils eingesetzt ist, können die in den beiden parallel zueinander verlaufenden Schenkel des Widerlagers eingearbeitete Bohrungen als Führungskanäle für einen Bohrer verwendet werden. Der Bohrer wird demnach in den Bohrungen zentriert gehalten, sodass in den jeweiligen Überstand eine koaxial verlaufende Bohrung eingearbeitet ist, und zwar unabhängig davon, ob ein Versatz zwischen den beiden Aufnahmeöffnungen der vereinzelten Glasscheiben vorhanden ist oder nicht. Anschließend kann der Haltebolzen durch diese Bohrungen hindurchgeführt werden und liegt an dem jeweiligen Überstand gleichmäßig an, wodurch eine geschlossene, zylindrische Wirkfläche entsteht, durch die die Belastungskräfte zwischen der Verbundsicherheitsglas-Platte und dem Haltebolzen übertragen sind.

Eine solche Maßnahme vereinfacht die Montage erheblich, denn die Fixierung der Verbundsicherheitsglas-Platte an dem Halteprofil kann ohne weiteres nach Fertigung der Bohrung in den Überständen der Klemmscheibe vorgenommen werden.

Um die Bohrung zuverlässig und ohne weitere Hilfsmittel vornehmen zu können, besteht die Klemmscheibe aus zwei Platten, die über eine Wand miteinander verbunden sind. Folglich überlappen die Klemmscheibe die Verbundsicherheitsglas-Platte im Bereich der umlaufenden Kante, wodurch die Klemmscheibe bzw. deren beiden Platten während des Bohrvorganges zuverlässig gegen Verdrehen gesichert sind. Wenn zudem in die Klemmscheibe jeweils im Bereich des Überstandes eine Feder vorgesehen bzw. angeordnet ist, entsteht durch die Feder eine vorgegebene in das Zentrum des Überstandes gerichtete Vorspannkraft, sobald der Haltebolzen durch den Überstand hindurchgeführt ist. Eine solche konstruktive Maßnahme erhöht die Übertragungssicherheit von Belastungskräften erheblich, denn nunmehr liegt der Außenumfang des Überstandes vollflächig und unter Vorspannung an der Innenseite der jeweiligen Aufnahmeöffnung an.

In der Zeichnung ist eine Befestigungsvorrichtung dargestellt, die nachfolgend näher beschrieben ist. Im Einzelnen zeigt:
- Figur 1: eine perspektivische Ansicht eines Möbels aus drei Verbundsicherheitsglas-Platten, die mittels vier Befestigungs-Vorrichtungen verbunden sind,
- Figur 2: eine der Befestigungs-Vorrichtungen gemäß Figur 1, in vergrößerter Ansicht, bestehend aus einem Halteprofil mit einem U-förmigen Widerlager, in das eine der Verbundsicherheitsglas-Platten eingesetzt ist und einem an dem Halteprofil angeformten und von diesem abstehenden Zapfen, an dem eine weitere Verbundsicherheitsglas-Platte arretiert ist,
- Figur 3: ein Schnitt, entlang der Schnittlinie III-III, gemäß Figur 2 und
- Figur 4: eine perspektivische Ansicht einer Klemmscheibe, die in das Widerlager des Halteprofils zur räumlichen Trennung des Halteprofils mit der jeweils darin eingesetzten Verbundsicherheitsglas-Platte angeordnet ist.

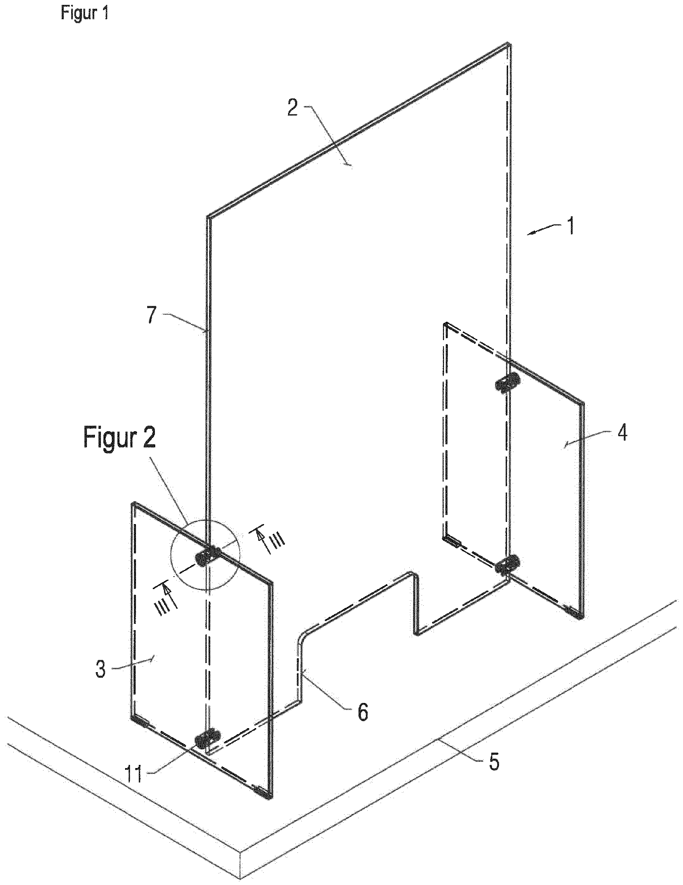

Figur 1 ist zunächst eine Trennwand als Möbel zu entnehmen, die aus drei Verbundsicherheitsglas-Platten 2, 3 und 4 zusammengesetzt bzw. aufgebaut ist. Die mittlere Verbundsicherheitsglas-Platte 2 dient dabei als Trennwand und soll beispielsweise zwei sich gegenüberstehenden Menschen vor der Übertragung von Tröpfcheninfektionen schützen. Die beiden äußeren Verbundsicherheitsglas-Platten 3 und 4 dienen als Stütze, sodass das derart hergestellte Möbel auf einen Untergrund 5 aufgesetzt werden kann. In der mittleren Platte 2 kann beispielsweise eine Durchgriffsöffnung 6 eingearbeitet sein, um Gegenstände austauschen zu können.

Die umlaufende Kante der mittleren Platte 2 ist dabei mit der Bezugsziffer 7 versehen. Die Kante 7 dient als Anschlag für die beiden äußeren Platten 3 und 4 und dort ist mittels einer nachfolgend näher erläuterten Befestigungs-Vorrichtung 1 eine mechanische Fixierung zwischen der mittleren Platte 2 und den jeweiligen beiden äußeren Platten 3 bzw. 4 herzustellen. Somit sind im gezeigten Ausführungsbeispiel vier Befestigungs-Vorrichtungen 1 erforderlich, um die Trennwand als Glas-Möbel herzustellen. Hierbei handelt es sich ausschließlich um eine beispielhafte Darstellung eines beliebigen Möbels. Die benachbart zueinander angeordneten Platten 2 und 3 bzw. 2 und 4 verlaufen senkrecht zueinander. Es ist ohne weiteres vorstellbar, dass durch eine entsprechende konstruktive Maßnahme im Bereich der BefestigungsVorrichtung 1 eine geneigte, also nicht senkrechte Ausrichtung dieser benachbarten Platten 2, 3 bzw. 2, 4 hergestellt werden kann.

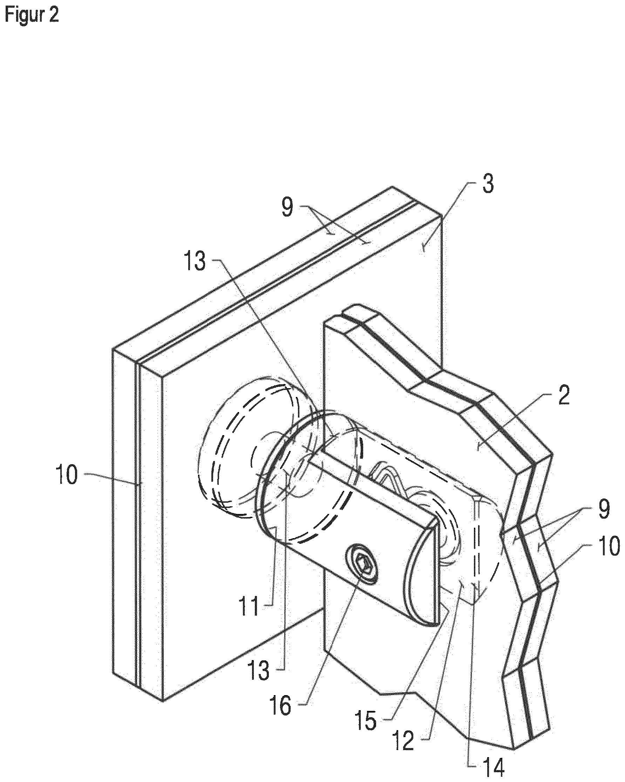

Aus Figur 2 ist zu entnehmen, dass die Befestigungs-Vorrichtung 1 aus einem Halteprofil 11 und einem von diesen senkrecht abstehenden Zapfen 17 gebildet ist, um die beiden zueinander senkrecht verlaufenen Platten 2 und 3 aufzunehmen und gegenseitig abzustützen bzw. zu verbinden. Solche Halteprofile 11 werden fachlich auch als sogenannte Punkthalter definiert.

Das Halteprofil 11 weist ein U-förmiges Widerlager 12 auf, in dessen Innenseite drei Auflageflächen 13, 14 sowie 15 vorgesehen sind, die jeweils der dort einzusetzenden Verbundsicherheitsglas-Platte 2 zugewandt sind. Die Platte 2 wird somit in das Widerlager 12 eingeführt und von diesem bereichsweise im Bereich der Kante 7 umgerissen. Der Zapfen 17 verläuft parallel zu dem Widerlager 12 und ist der benachbarten Platte 3 zugewandt, sodass die Platte 3 über den Zapfen 17 aufgeschoben werden kann.

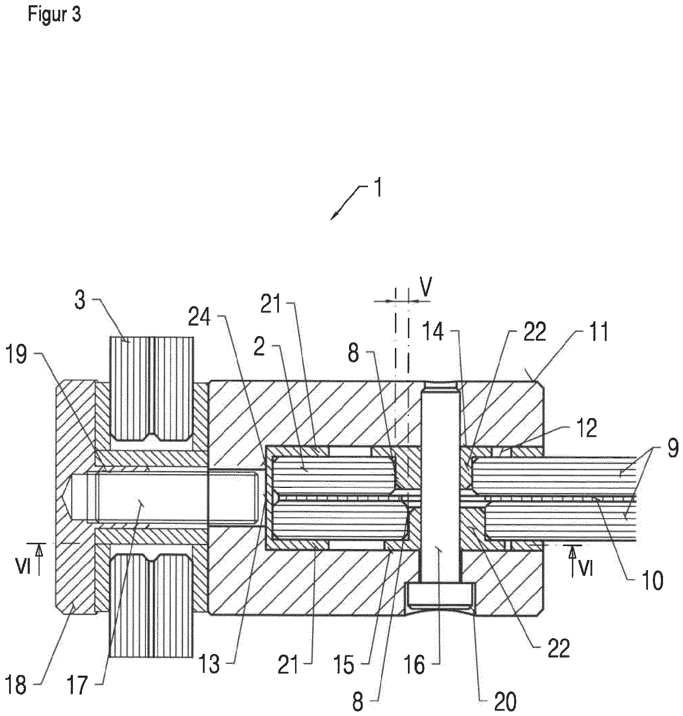

Aus Figur 3 ist ersichtlich, dass die Verbundsicherheitsglas-Platte 2 aus zwei vereinzelten Sicherheitsglasscheiben 9 aufgebaut ist. In jede der Glasscheiben 9 ist eine Aufnahmeöffnung 8 eingearbeitet. Gemäß den bekannten Herstellungsprozessen für Verbundsicherheitsglas-Platten sind die beiden zunächst vereinzelten Sicherheitsglasscheiben 9 mittels einer Laminatfolie 10 thermisch miteinander zu verbinden, wodurch zwischen den beiden Aufnahmeöffnungen 8 in den Glasscheiben 9 ein Versatz V entstehen kann. Dieser Versatz V soll und ist durch eine erfindungsgemäße Klemmscheibe 21 auszugleichen.

Die Klemmscheibe 21 verläuft nach deren Montage im Inneren des Widerlagers 12 und liegt vollständig an den drei Auflageflächen 13, 14 und 15 des Widerlagers 12 an. Die entsprechend hergestellte Verbundsicherheitsglas-Platte 2 ist zum einen in das Widerlager 12 eingesetzt und zum anderen umgreift die Klemmscheibe 21 die Platte 2, sodass die Klemmscheibe 21 zwischen den Auflageflächen 13, 14 und 15 sowie der Platte 2 angeordnet ist.

Die senkrecht zu der Platte 2 verlaufende Platte 3 ist ebenso mit entsprechenden Aufnahmeöffnungen 8 versehen, sodass der Zapfen 17 die Platte 3 vollständig durchgreift und teilweise aus dieser übersteht. Um die Platte 3 an dem Halteprofil 11 und damit der Platte 2 zu fixieren, ist an dem Zapfen 17 ein Gewinde 19 angearbeitet, auf das ein Halteteller 18 aufgeschraubt werden kann, durch den die Platte 3 zwischen der Unterseite des Widerlagers 12 des Halteprofils 11 und dem Halteteller 18 eingespannt bzw. arretiert ist.

Folglich verlaufen die beiden an dem Halteprofil 11 und dem Zapfen 17 angeordneten Platten 2 und 3 senkrecht zueinander.

Um den Versatz V zwischen den beiden Aufnahmeöffnungen 8 der Glasscheiben 9 während der Montage der Verbundsicherheitsglas-Platte 2 ausgleichen zu können und insbesondere zu verhindern, dass unterschiedliche Belastungskräfte auf die einzelnen Glasscheiben 9 nach der Montage einwirken, ist an der Klemmscheibe 21 jeweils eine der Aufnahmeöffnung 8 zugeordnete und vollständig in diese eintauchende Überstand 22 vorgesehen bzw. angeformt. Der Überstand 22 ist zylinderförmig ausgestaltet und dessen Außenkontur ist an die Innenkontur der Aufnahmeöffnung 8 angepasst, sodass der jeweilige Überstand 22 vollflächig an der Innenseite der Aufnahmeöffnung 8 anliegt. Der jeweilige Überstand 22 ist aus dem Vollen gefertigt; es sind also keine Hohlräume in diesen vorhanden.

In die beiden parallel zueinander verlaufenden Schenkel des Widerlagers 12 ist eine Bohrung 20 eingearbeitet, die während der Montage der Platte 2 an dem Halteprofil 11 als Führungskanal dient. In die Bohrung 2 kann nämlich zunächst ein entsprechend ausgestalteter Bohrer eingesetzt werden und durch diesen wird in die beiden gegenüberliegenden Überstände 22 der Klemmscheibe 21 eine koaxial verlaufende Bohrung eingearbeitet, durch die anschließend ein Haltebolzen 16 hindurchgesteckt werden kann. Der Haltebolzen 16 verbindet bzw. fixiert nach dessen Montage die Platte 2 mit dem Halteprofil 11. Dabei übt der Haltebolzen 16 eine nach außen gerichtete Verformungskraft auf die beiden Überstände 22 aus, wodurch diese gleichmäßig und vollflächig auf die Innenseite der jeweiligen Aufnahmeöffnung 8 der Glasscheiben 9 der Platte 2 angepresst sind, und zwar unabhängig von dem vorhandenen Versatz V der beiden Aufnahmeöffnungen zueinander. Vielmehr gleichen die beiden Überstände 22 den vorhanden Versatz V aus.

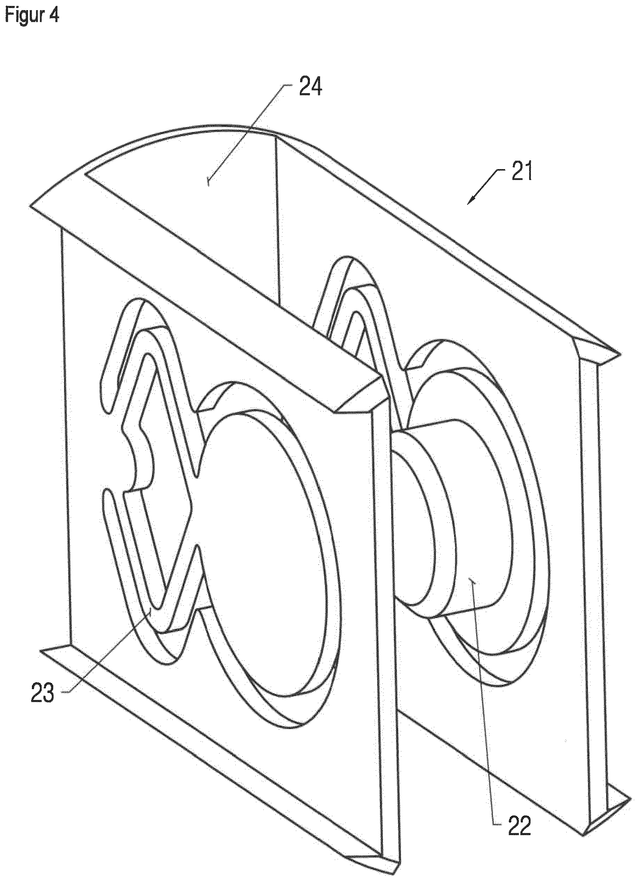

In Figur 4 ist die Klemmscheibe 21 als einzelnes Bauteil zu entnehmen, die üblicherweise aus einem Kunststoffmaterial hergestellt ist. Dabei soll das Kunststoffmaterial der Klemmscheibe 21 eine gewisse Biegesteifigkeit und elastische Verformbarkeit aufweisen. Zudem besteht die Klemmscheibe 21 aus zwei parallel zueinander verlaufenden Platten 25 und 26, an denen jeweils einer der Überstände 22 angeformt bzw. vorgesehen ist. Die Platten 25 und 26 sind mittels einer Wand 24 verbunden, sodass die Klemmscheibe 21 einstimmig ausgestaltet ist.

Darüber hinaus kann in die jeweilige Platte 25 bzw. 26 eine Feder 23 eingearbeitet bzw. vorgesehen sein, die den Überstand teilweise bzw. vollständig umgreift, sodass von der Feder 23 eine nach innen gerichtete Vorspannkraft auf den Überstand 22 ausgeübt ist. Sobald der Haltebolzen 16 in den jeweiligen Überstand 22 eingesetzt ist, entsteht zwischen diesem und der Feder 23 eine vorbestimmte Anpresskraft, wodurch die Außenkontur des Überstandes 22 gleichmäßig an die Innenseite der Aufnahmeöffnung 8 angepresst ist und folglich vollflächig an dieser anliegt, um die entsprechenden Belastungskräfte gleichmäßig unabhängig von dem vorhandenen Versatz V zu übertragen.

Die Klemmscheibe 21 ist im Bereich der Kante 7 der Platte 2 aufgesetzt, sodass bei der Einarbeitung der Bohrung in die beiden Überstände 22 die auftretenden Rotationskräfte, insbesondere durch die Verbindung zwischen der Wand 24 und der Kante 7 der Platte 2 aufgenommen und abgestützt ist, wodurch die Klemmscheibe 21 während des Bohrvorganges gehalten ist.

## Patentansprüche

1. Befestigungs-Vorrichtung (1) für zwei zueinander senkrecht oder in einem spitzen Winkel angeordnete Verbundsicherheitsglas-Platten (2, 3, 4),
bestehend aus:
- einem Halteprofil (11), das ein U-förmiges Widerlager (12) mit drei einer der beiden Platten (2) zugewandten Auflageflächen (13, 14, 15) aufweist,
- einem beabstandet zu dem Widerlager (12) verlaufenden und an dem Halteprofil (11) angeformten Zapfen (17), an den die zweite Platte (3 oder 4) befestigbar ist und
- aus einem Halteteller (18), der auf ein an dem Zapfen (17) angearbeitetes Gewinde (19) aufschraubbar ist und durch den die zweite Platte (3 oder 4) an der Unterseite des Widerlagers (12) mit dem Halteprofil (11) verspannt bzw. arretiert ist,
**dadurch gekennzeichnet,**
**dass** in dem Widerlager (12) eine Klemmscheibe (21) eingesetzt ist, die zwischen den drei Auflageflächen (13, 14, 15) des Widerlagers (12) und der in diese eingesetzte Verbundsicherheitsglas-Platte (2) verläuft, dass die Klemmscheibe (21) einen zylinderförmigen Überstand (22) aufweist, der im Bereich der jeweiligen in die Platte (2) eingearbeiteten Aufnahmeöffnung (8) eingesetzt ist und dass durch den Überstand (22) und der jeweiligen Aufnahmeöffnung (8) der Platte (2) ein Haltebolzen (16) hindurchgeführt ist, durch den die Verbundsicherheitsglas-Platte (2) an dem Halteprofil (11) abgestützt ist, derart, dass der jeweilige Überstand (22) vollflächig an der Innenseite der Aufnahmeöffnung (8) der Platte (2) unter Vorspannung anliegt.

2. Vorrichtung nach Anspruch 1,
**dadurch gekennzeichnet,**
**dass** in die Klemmscheibe (21) im Bereich des Überstandes (22) eine Feder (23) eingesetzt oder eingearbeitet ist, durch die eine Vorspannkraft auf den Überstand (22) derart ausgeübt ist, dass der Überstand (22) in Richtung der diesen durchgreifenden Haltebolzen (16) gepresst ist.

3. Vorrichtung nach Anspruch 1 oder 2,
**dadurch gekennzeichnet,**
**dass** der Überstand (22) die jeweilige Aufnahmeöffnung (8) der Platte (2) vollständig ausfüllt.

4. Vorrichtung nach einem der vorgenannten Ansprüche,
**dadurch gekennzeichnet,**
**dass** die Klemmscheibe (21) aus zwei parallel zueinander verlaufenden Platten (25, 26) gebildet ist und dass der jeweilige Überstand (22) im Zentrum einer der Platten (25, 26) angeordnet ist.

5. Vorrichtung nach Anspruch 4,
**dadurch gekennzeichnet,**
**dass** die beiden Platten (25, 26) über eine elastisch verformbare Wand (24) miteinander verbunden sind.

6. Vorrichtung nach einer der vorgenannten Ansprüche
**dadurch gekennzeichnet,**
**dass** die Klemmscheibe (21) und der Überstand (22) aus einem biegesteifen und elastisch geringfügig verformbaren Kunststoff hergestellt ist.

7. Vorrichtung nach einem der vorgenannten Ansprüche,
**dadurch gekennzeichnet,**
**dass** die beiden Überstände (22) der Klemmscheibe (21) fluchtend und einander zugewandt angeordnet sind.

8. Vorrichtung nach einem der vorgenannten Ansprüche,
**dadurch gekennzeichnet,**
**dass** durch eine Vielzahl dieser Halteprofile (11) ein Möbel, insbesondere eine Infektionsschutzwand aus Verbundsicherheitsglas-Platten (2, 3, 4) herstellbar ist.

9. Vorrichtung nach einem der vorgenannten Ansprüche,
**dadurch gekennzeichnet,**
**dass** in den beiden parallel verlaufenden Schenkeln des Halteprofils (11) jeweils eine Bohrung (20) eingearbeitet ist, die in das Widerlager (12) münden und koaxial zueinander verlaufen, und dass die Bohrung (20) als Führungskanal dient, derart, dass in den beiden Überständen (22) der Klemmscheibe (21) eine zentrische Öffnung in diese entsteht, durch die der Versatz (V) der Aufnahmeöffnung (8) ausgeglichen ist.

## Claims

1. Fastening device (1) for two laminated safety glass panels (2, 3, 4) arranged perpendicularly to one another or at an acute angle, the device consisting of:
- a holding profile (11) which has a U-shaped abutment (12) with three bearing surfaces (13, 14, 15) facing one of the two panels (2),
- a pin (17) which extends at a distance from the abutment (12) and is integrally formed on the holding profile (11) and to which the second panel (3 or 4) can be fastened and
- a holding plate (18) which can be screwed onto a thread (19) formed on the pin (17) and by means of which the second panel (3 or 4) is clamped or locked to the holding profile (11) on the underside of the abutment (12),
**characterized in that**
a clamping disk (21) is inserted in the abutment (12), which clamping disk extends between the three bearing surfaces (13, 14, 15) of the abutment (12) and the laminated safety glass panel (2) inserted thereinto, **in that** the clamping disk (21) has a cylindrical projection (22) which is inserted in the region of the relevant receiving opening (8) incorporated into the panel (2) and **in that** a holding bolt (16) is passed through the projection (22) and the relevant receiving opening (8) of the panel (2), by means of which holding bolt the laminated safety glass panel (2) is supported on the holding profile (11) in such a way that the relevant projection (22) rests over the entire surface on the inside of the receiving opening (8) of the panel (2) under pretension.

2. Device according to claim 1,
**characterized in that**
a spring (23) is inserted or incorporated into the clamping disk (21) in the region of the projection (22), by means of which spring a pretensioning force is exerted on the projection (22) in such a way that the projection (22) is pressed in the direction of the holding bolts (16) passing therethrough.

3. Device according to either claim 1 or claim 2,
**characterized in that**
the projection (22) completely fills the relevant receiving opening (8) of the panel (2).

4. Device according to any of the preceding claims,
**characterized in that**
the clamping disk (21) is formed from two panels (25, 26) extending parallel to one another and **in that** the relevant projection (22) is arranged in the center of one of the panels (25, 26).

5. Device according to claim 4,
**characterized in that**
the two panels (25, 26) are connected to one another via an elastically deformable wall (24).

6. Device according to any of the preceding claims,
**characterized in that**
the clamping disk (21) and the projection (22) are made of a rigid and slightly elastically deformable plastics material.

7. Device according to any of the preceding claims,
**characterized in that**
the two projections (22) of the clamping disk (21) are arranged in alignment and facing one another.

8. Device according to any of the preceding claims,
**characterized in that**
a piece of furniture, in particular an anti-infection wall, can be produced from laminated safety glass panels (2, 3, 4) using a large number of these holding profiles (11).

9. Device according to any of the preceding claims,
**characterized in that**
a bore (20) is incorporated into each of the two parallel legs of the holding profile (11), which bores open into the abutment (12) and extend coaxially to one another, and **in that** the bore (20) is used as a guide channel such that a central opening is created in the two projections (22) of the clamping disk (21), through which opening the offset (V) of the receiving opening (8) is compensated for.

## Revendications

1. Dispositif de fixation (1) pour deux panneaux (2, 3, 4) de verre composite de sécurité agencés verticalement l'un par rapport à l'autre ou en angle aigu, comprenant :
- un profilé de maintien (11), lequel comporte une butée (12) en forme de U comportant trois surfaces d'appui (13, 14, 15) tournées vers l'un des deux panneaux (2),
- une goupille (17), laquelle s'étend à distance de la butée (12) et formée sur le profilé de maintien (11), sur laquelle le deuxième panneau (3 ou 4) peut être fixé et
- une plaque de maintien (18), laquelle peut être vissée sur un filetage (19) taraudé sur la goupille (17) et au moyen de laquelle le deuxième panneau (3 ou 4) est serré ou fixé au profilé de maintien (11) sur la face inférieure de la butée (12),
**caractérisé en ce**
**que** dans la butée (12), un disque de serrage (21) est inséré, lequel s'étend entre les trois surfaces d'appui (13, 14, 15) de la butée (12) et le panneau (2) de verre composite de sécurité inséré dans celle-ci, que le disque de serrage (21) comporte une saillie (22) cylindrique, laquelle est insérée dans la zone d'une ouverture de réception (8) respective incorporée dans le panneau (2) et qu'un boulon de retenue (16) est passé à travers la saillie (22) et l'ouverture de réception (8) respective du panneau (2), au moyen duquel le panneau (2) de verre composite de sécurité s'appuie sur le profilé de maintien (11) de telle sorte que la saillie (22) respective repose sous précontrainte sur toute la surface sur la face intérieure de l'ouverture de réception (8) du panneau (2).

2. Dispositif selon la revendication 1,
**caractérisé en ce**
**qu'**un ressort (23) est inséré ou intégré dans le disque de serrage (21) dans la zone de la saillie (22), au moyen duquel une force de précontrainte est exercée sur la saillie (22) de telle sorte que la saillie (22) est enfoncée en direction du boulon de retenue (16), lequel la traversent.

3. Dispositif selon la revendication 1 ou 2,
**caractérisé en ce**
**que** la saillie (22) remplit complètement l'ouverture de réception (8) respective du panneau (2).

4. Dispositif selon l'une quelconque des revendications précédentes,
**caractérisé en ce**
**que** le disque de serrage (21) est formé de deux panneaux (25, 26) s'étendant parallèlement l'un par rapport à l'autre et que la saillie (22) respective est disposée au centre de l'un des panneaux (25, 26).

5. Dispositif selon la revendication 4,
**caractérisé en ce**
**que** les deux panneaux (25, 26) sont reliés l'un à l'autre à l'aide d'une paroi (24) élastiquement déformable.

6. Dispositif selon l'une quelconque des revendications précédentes
**caractérisé en ce**
**que** le disque de serrage (21) et la saillie (22) sont fabriqués en une matière plastique résistante à la flexion et légèrement déformable élastiquement.

7. Dispositif selon l'une quelconque des revendications précédentes,
**caractérisé en ce**
**que** les deux saillies (22) du disque de serrage (21) sont alignées et se font face.

8. Dispositif selon l'une quelconque des revendications précédentes,
**caractérisé en ce**
**que**, au moyen d'une pluralité de dits profilés de maintien (11), un meuble, en particulier une paroi moulée de protection contre les infections, peut être fabriqué à partir de panneaux (2, 3, 4) de verre composite de sécurité.

9. Dispositif selon l'une quelconque des revendications précédentes,
**caractérisé en ce**
**que**, dans les deux branches parallèles du profilé de maintien (11), un alésage (20) est respectivement intégré, lesquels débouchent dans la butée (12) et s'étendent coaxialement l'un à l'autre, et que l'alésage (20) sert de canal de guidage de telle sorte que dans les deux saillies (22) du disque de serrage (21) se crée une ouverture centrale dans celui-ci, au moyen de laquelle un décalage (V) de l'ouverture de réception (8) est compensé.
